# EUROPÄISCHE PATENTSCHRIFT

(11) **EP 0 698 473 B1**
(45) Veröffentlichungstag und Bekanntmachung des Hinweises auf die Patenterteilung: **07.07.1999**
(21) Anmeldenummer: 95111741.5
(22) Anmeldetag: 26.07.1995
(51) Int. Cl.: B29C 65/02, B29C 65/34

(54) **Verfahren zum Verschweissen von Rohrmuffen**
Process for welding sockets for tubes
Procédé pour le soudage de manchons pour tubes

(30) Priorität: 13.08.1994 DE 4428767
(43) Veröffentlichungstag der Anmeldung: 28.02.1996
(73) Patentinhaber: REHAU AG + Co, 95111 Rehau (DE)
(72) Erfinder: Bröcker, Manfred, D-95111 Rehau (DE); Baumgärtel, Christof, D-95111 Rehau (DE)

(56) Entgegenhaltungen:
- EP-A- 0 253 966
- DE-A- 3 426 246
- FR-A- 1 133 731
- FR-A- 2 112 807
- GB-A- 1 501 873
- JP-A- 59 176 018
- JP-A- 63 260 429
- US-A- 3 133 846
- US-A- 3 788 928
- PATENT ABSTRACTS OF JAPAN vol. 007 no. 215 (M-244) ,22.September 1983 & JP-A-58 108108 (SEIBU PORIMA KASEI KK) 28.Juni 1983,

## Beschreibung

Die Erfindung betrifft ein Verfahren zum Verschweißen von vorgeformten Rohrmuffen aus thermoplastischem Kunststoff mit in das Muffenlumen eingesetzten Enden von Kunststoffrohren, wobei die zu verschweißenden Muffen-/Rohrbereiche durch Zuführung von Wärme aufgeschmolzen werden und wenigstens im Bereich der Schweißung ein Überdruck aufgebaut wird.

Aus der Europäischen Patentanmeldung EP-A-0 253 966 A1 ist ein Formteil aus thermoplastischen Material bekannt, welches bei der Verlegung von Rohrleitungen vor und während des Schweißvorgangs auf den Leitungsenden fixiert werden kann und mit welchem eine dichte und feste Schweißverbindung erzielbar ist. Das Formteil weist im Muffenbereich umfangsmäßig verteilt wenigstens einen radialen, in axialer Richtung verlaufenden Einschnitt auf. Im Bereich dieses Einschnittes ist außenseitig wenigstens ein Spannelement im Muffenbereich des Formteils angeordnet. Beim Zusammenwirken des Spannelementes mit dem Einschnitt kann eine Teillänge des Formteils radial verformt werden, wodurch mit einfachen Spannmitteln und geringen Kräften vor Beginn des Schweißvorgangs eine sichere Klemmung des Formteils auf dem Rohrende erreichbar ist. Der eigentliche Schweißvorgang kann dann ohne zusätzliche Haltevorrichtung zum ausgerichteten Verschweißen der Rohrenden mit den Formteilen erfolgen. Gleichzeitig wird durch die Vorspannung der Schweiß-Muffen-Partie ein Schweißdruck erzeugt, welcher eine dichte Schweißung gewährleistet.

Obwohl die dadurch erzielbaren Rohr-Formteil-Verbindungen für den Einsatz in vielen Bereichen brauchbar sind, ist dieses Verfahren für den Baustellenbetrieb viel zu aufwendig. Neben der besonderen Ausgestaltung der Formkörper mit den am Umfang verteilten Einschnitten sind von außen angreifende Spannbänder im Einsatz, die zu ihrer Betätigung einen entsprechenden Montageplatz benötigen. Dieser Platz ist aber oftmals bei der Verlegung von wasser- bzw. medienführenden Leitungen nicht vorhanden.

Bekannt sind ferner Heizwendel-Schweißmuffen-Systeme, die mit auf die standardisierten Rohr- und Fittingdurchmesser abgestimmten Maßen arbeiten. Um hier optimale Schweißverbindungen zu erhalten, wären optimale Schweißbedingungen - Nullpassung oder leichte Verpressung im Schweißbereich - erforderlich. Diese optimalen Bedingungen sind aber wegen der unvermeidlichen Toleranzen der Steckenden der Rohre und der Muffen der Formteile nur selten erreichbar.

Neben den bekannten Heizwendel-Schweißmuffen-Systemen ist es bekannt, Rohre und Formteile im Stumpfschweißverfahren miteinander zu verbinden. Als Beispiel wird hier die Schweizerische Patentschrift CH-A-673 433 genannt. Für eine derartige Verschweißung ist ein definierter Fügedruck erforderlich. Nach der Schweizerischen Patentschrift CH-A-676 689 wird dieser axiale Fügedruck durch radial von außen angreifende Klemmbacken und durch eine im Rohrlumen unter der Schweißstelle angeordnete, durch Druckluft aufweitbare Blase aufgebracht. Diese Schweißverfahren bedürfen einer aufwendigen Verbindungstechnik und sind für Arbeiten auf der Baustelle ungeeignet.

In der JP-A-63-260429 ist ein Verfahren zum Verschweißen von thermoplastischen Rohren dargestellt.

Bei diesem Verfahren wird während des Schweißvorganges der Außendurchmesser der Rohrmuffe durch eine verstellbare Schelle und der Innendurchmesser des zu verschweißenden Rohrendes durch einen verstellbaren Stutzkörper unterstutzt.

Gegenüber diesem Stand der Technik hat sich die Erfindung die Aufgabe gestellt, bei Heizwendel-Schweißmuffen-Systemen ein Fügeverfahren anzugeben, welches die Toleranzen der Rohrsteckenden und der Muffen ohne großen vorrichtungstechnischen Aufwand überwindet und welches so einfach gehalten ist, daß es im Baustellenbetrieb bei der Montage leicht anwendbar ist.

Erfindungsgemäß wird dies durch die Merkmale des Anspruches 1 gelöst.

Eine zweckmäßige Weiterbildung der Erfingung ist im Anspruch 2 beschrieben.

Dieser Überdruck kann durch eine hydraulisch, pneumatisch oder mechanisch wirkende Vorrichtung von der Rohrinnenseite her erzeugt werden. Die einfachste Methode der Erzeugung dieses optimierten Fügedrucks ist die Verwendung eines mechanischen Expanders.

Dieser Expander kann so eingestellt sein, daß mit zunehmender Verspannung das zu verschweißende Rohrende aufgeweitet wird, bis der Außenumfang des Rohres am Innenumfang der Schweißmuffe anliegt. Durch die entsprechende Dosierung des Expansionsdruckes unter Berücksichtigung der erforderlichen Kraft für die Dehnung des zu verschweißenden Rohrendes kann dabei unter Berücksichtigung des vorgegebenen Dehnverhaltens des Rohrwandmaterials ein optimaler Fügedruck zwischen dem Rohrende und der Muffe eingestellt werden. Dieser optimale Fügedruck begradigt dabei die Toleranzen zwischen dem Rohrende und der Muffe und sorg für ein umfangsgerechtes Anliegen des Außendurchmessers des Rohrendes am Innendurchmesser des Muffenkörpers.

Zur Durchführung des erfindungsgemäßen Verfahrens gibt es, abhängig von der Ausführung der Rohrmuffe mit oder ohne inneren Anschlag zwei Verfahrensabläufe.
a) Bei einer Rohrmuffe ohne inneren Anschlag wird zunächst die als Formteil vorliegende Rohrmuffe über das zu verschweißende Rohrende hinaus auf das Rohr aufgeschoben. Danach wird der Expander in das Lumen des Rohrendes eingesteckt und durch ein leichtes erste Expandieren an der vorgesehenen Schweißstelle fixiert. Danach wird als weiterer Verfahrensschritt die Rohrmuffe auf dem zu verschweißenden Rohrende in Schweißposition gebracht. Diese Schweißposition befindet sich direkt unterhalb des fixierten Expanders. Das Rohrende wird danach durch weiteres Expandieren des Expanders aufgedehnt und mit der über den Expander auf das Rohrende ausgeübten Dehnkraft an die Innenseite der Rohrmuffe angepresst.
b) Bei Rohrmuffen mit innerem Anschlag wird die als Formteil vorliegende Rohrmuffe bis zum Anschlag auf das zu verschweißende Rohrende geschoben. Danach wird der Expander in das Lumen des Rohrendes eingesteckt, durch leichtes Expandieren an der vorgesehenen Schweißstelle fixiert und die korrekte Position der Rohrmuffe am Anschlag des Rohrendes überprüft. Das Rohrende wird danach durch weiteres Expandieren des Expanders aufgedehnt und mit der über dem Expander auf das Rohrende ausgeübten Dehnkraft an die Innenseite der Muffe angepresst.

Der weitere Verfahrensablauf ist für beide Rohrmuffenausführungen identisch.

Nach Abschluß dieses Anpressvorgangs wird der eigentliche Schweißvorgang eingeleitet und zu Ende geführt.

Danach erfolgt die Abkühlung der hergestellten Schweißverbindung, wobei der Expander in seinem druckbeaufschlagten Sitz an der Schweißstelle verbleibt.

Dieser Sitz wird erst nach dem erfolgten Abkühlen der Schweißstelle aufgehoben, d.h. der Expander wird dann entspannt und aus der nunmehr mit dem Rohrende verschweißten Rohrmuffe herausgenommen.

Der besondere Vorteil des erfindungsgemäßen Verfahrens wird darin gesehen, daß Rohrenden mit großen Außendurchmessertoleranzen sowie mit größeren Unrundheiten und Ovalitäten mit Formteilen, z.B. Rohrmuffen verschweißt werden können. Ferner können dünnwandige Rohre mit Muffen, die für größere Rohrwanddicken ausgelegt sind, verschweißt werden, da der Expander die Beulung der dünnen Rohre durch seine Stützwirkung verhindert.

Eine Reduzierung der Schweißspannungen in der Verbindung, die vor allem durch toleranzbedingte größere Dehnungen beim Expandieren der Rohre im kalten Zustand auftreten können, kann, falls erforderlich, durch einen isolierenden Expander - z.B. durch eine aufweitbare Blase - erreicht werden.

Als besonders vorteilhaft ist herauszustellen, daß die mit dem erfindungsgemäßen Verfahren erzielbare hohe Schweißgüte solcher Schweißverbindungen eine Verkleinerung der Schweißfläche gegenüber Standardmuffen ermöglicht. Dies ist nicht nur ein technischer, sondern auch ein preislicher Vorteil des erfindungsgemäßen Verfahrens. Dadurch wird u.a. auch die erforderliche Schweißenergie mit den positiven Auswirkungen auf den geringeren Energiebedarf bei der Dimensionierung der Schweißgeräte reduziert.

## Patentansprüche

1. Verfahren zum Verschweißen von vorgeformten Rohrmuffen aus thermoplastischem Kunststoff mit in das Muffenlumen eingesetzten Enden von Kunststoffrohren, wobei die zu verschweißenden Muffen-/Rohrbereiche durch Zuführung von Wärme aufgeschmolzen werden und wenigstens im Bereich der Schweißung ein Überdruck aufgebaut wird,
dadurch gekennzeichnet,
daß der Überdruck durch einen Expander vor Beginn des Schweißvorganges aufgebaut wird, daß der Überdruck das zu verschweißende Rohrende aufweitet bid der Außenumfang des Rohrendes am Innenumfang der Schweißmuffe anliegt und daß der Überdruck bis zum Ende der Abkühlung nach Beendigung des Schweißvorganges aufrechterhalten wird.

2. Verfahren nach Anspruch 1, dadurch gekennzeichnet, daß der Überdruck mechanisch, hydraulisch oder pneumatisch aufgebracht wird.

## Claims

1. A method for welding a preformed pipe sleeve made of a thermoplastic material to a plastic pipe end inserted in the sleeve opening, in which the relevant sections of the sleeve and pipe are melted and expanded by the application of heat and positive pressure is generated at least around the weld region, characterised in that the positive pressure is generated before commencement of the welding operation using an expander, in that the positive pressure expands the pipe end that is to be welded until the outer circumference of the pipe end lies against the inner circumference of the welding sleeve, and in that the positive pressure is maintained until the end of the cooling phase after completion of the welding operation.

2. A method according to Claim 1, characterised in that the positive pressure is generated by mechanical, hydraulic or pneumatic means.

## Revendications

1. Procédé pour souder des manchons préformés en matière thermoplastique aux extrémités de tubes en polymères utilisées dans le lumen du tube, les zones à souder du manchon/tube étant fondues sous l'effet de la chaleur et une surpression étant produite au niveau du soudage au moins, caractérisé en ce que la surpression est produite par un expanseur de volume au début du procédé de soudage, en ce que la surpression expanse l'extrémité du tube à souder jusqu'à ce que le pourtour de l'extrémité du tube adhère au contour intérieur du manchon et en ce que la surpression est maintenue jusqu'à complet refroidissement de l'opération de soudage.

2. Procédé selon la revendication 1, caractérisé en ce que la surpression peut être produite de façon mécanique, hydraulique ou pneumatique.
